# EUROPEAN PATENT SPECIFICATION

(11) **EP 2 927 424 B1**
(45) Date of publication and mention of the grant of the patent: **13.11.2019**
(21) Application number: 15161309.8
(22) Date of filing: 27.03.2015
(51) Int. Cl.: F01D 5/00

(54) **REPAIR METHOD**
VERFAHREN zur reparatur
PROCEDE DE REPARATION

(30) Priority: 04.04.2014 US 201461975543 P
(43) Date of publication of application: 07.10.2015
(73) Proprietor: United Technologies Corporation, Farmington, CT 06032 (US)
(72) Inventor: Belanger, Philip R., Acton, ME Maine 04001 (US); Lutjen, Paul M., Kennebunkport, ME Maine 04046 (US); Hayford, Richard K., Cape Neddick, ME Maine 03902 (US)
(74) Representative: Dehns

(56) References cited:
- EP-A1- 2 078 587
- EP-A2- 0 401 187
- WO-A1-03/048528
- WO-A2-2007/075497
- DE-C1- 19 547 903

## Description

### FIELD

The present disclosure relates to a method for repair according to the preamble of claim 1.

### BACKGROUND

Gas turbine engines generally include a compressor to pressurize inflowing air, a combustor to burn a fuel in the presence of the pressurized air, and a turbine to extract energy from the resulting combustion gases. The turbine may include multiple rotatable turbine blade arrays separated by multiple stationary vane arrays. A turbine blade array may be disposed radially inward of an annular BOAS assembly. Frequently, portions of the BOAS assembly such as seals within the assembly may be damaged, e.g., by abrasion, impact or oxidation erosion.

A prior art method for repair having the features of the preamble of claim 1 is disclosed in EP 0,401,187. Another prior art method for repair using a flexible applicator is disclosed in WO 2007/075497.

### SUMMARY

The present invention provides a method for repair in accordance with claim 1.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
Figure 1A illustrates a cross-sectional view of a jet engine;
Figure 1B illustrates a cross-sectional view of a turbine portion of a jet engine;
Figure 1C illustrates a perspective view of a segment of a BOAS assembly having a sealing interface that has been damaged;
Figure 1D illustrates a perspective view of a damaged sealing interface;
Figure 2A illustrates a shaped cavity;
Figure 2B illustrates a perspective view of a portion of a BOAS assembly having a sealing interface that has been repaired; and
Figure 3 illustrates, in accordance with various embodiments, a process for repairing a damaged component.

### DETAILED DESCRIPTION

The detailed description herein makes reference to the accompanying drawings.

In addition, although the description provided herein may focus on a particular aircraft component (e.g., a sealing interface comprising a portion of a BOAS assembly), those of ordinary skill will appreciate that the methods and techniques for repairing damaged components may apply to a wide variety of components.

As used herein, "aft" refers to the direction associated with the tail (e.g., the back end) of an aircraft, or generally, to the direction of exhaust of the gas turbine. As used herein, "forward" refers to the directed associated with the nose (e.g., the front end) of an aircraft, or generally, to the direction of flight or motion.

Jet engines often include one or more stages of BOAS and/or vane assemblies. Each BOAS and/or vane assembly may comprise one or more sections or segments. In some embodiments the BOAS are detachably coupled to an axially adjacent vane assembly, in other embodiments, the BOAS is integral with an axially adjacent vane assembly, in either case and without loss of generality, the present application refers to these as BOAS. In some applications, the BOAS is also referred to as a static turbine shroud. A segment of a BOAS assembly may be disposed radially outward of a turbine blade and/or a plurality of turbine blades relative to an engine axis. A BOAS assembly may thus comprise an annular structure comprising a plurality of BOAS assembly segments, each BOAS assembly segment disposed radially about one or more of a plurality of turbine blades, each of which may rotate, during operation, within the BOAS assembly.

Each BOAS segment may couple to an adjacent BOAS segment to form the annular BOAS assembly described above by way of a plurality of sealing interfaces. Over time, some of these sealing interfaces may erode or otherwise wear away (e.g., via an oxidation erosion process) such that a seal formed between one or more consecutive BOAS segments may fail to contain the pressure and temperature of the combustion gasses within the high pressure turbine. This loss of pressure may result, in addition to damage to the BOAS assembly, in a loss of fuel efficiency.

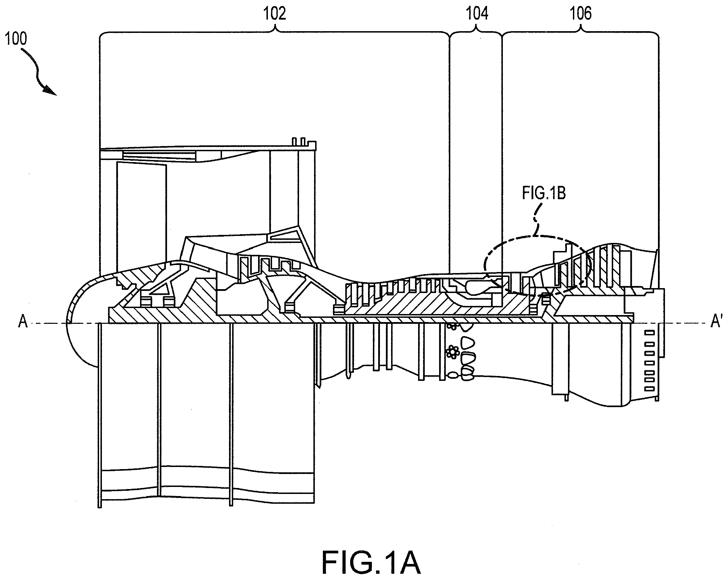

Accordingly, with reference to Figure 1A, a jet engine (e.g., a gas turbine engine) 100 is shown. The jet engine 100 may extend, from forward to aft, along the central axis marked A-A'. In general terms, a jet engine may comprise a compressor section 102, a combustion chamber 104, and a turbine section 106. Air may flow through the compressor section 102 (which may comprise a plurality of compressor blades) and into the combustion chamber 104, where the air is mixed with a fuel source and may be ignited to produce hot combustion gasses. These hot combustion gasses may drive a series of turbine blades within the turbine section 106, which in turn drive, for example, one or more compressor section blades mechanically coupled thereto.

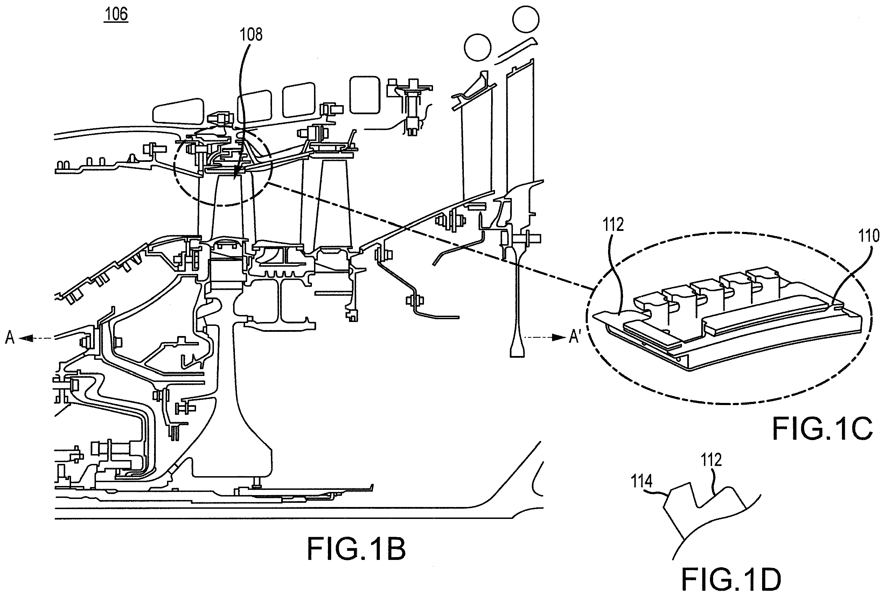

Figure 1B shows an area within the turbine section 106 that includes a BOAS assembly 108. The BOAS assembly 108 may comprise a plurality of BOAS segments 110, as described above and as shown, at Figure 1C. Each segment 110 may couple to an adjacent segment to form an annular BOAS assembly that is concentrically situated about a plurality of turbine blades, each radially extending away from the axis A-A'.

As described above, and as shown with respect to Figure 1C, a BOAS segment 110 may comprise a sealing interface 112. The sealing interface 112 may be damaged by abrasion, impact or erode over time (e.g., where the sealing interface 112 comprised of nickel or cobalt alloy, via abrasion, impact or oxidation erosion process), such that the interface may form an incomplete seal with an adjacent sealing interface (e.g., comprising an adjacent BOAS segment).

A damaged sealing interface 112 is shown, for clarity, at Figure 1D. As shown, the edge 114 of the sealing interface 112 may erode or abrade away such that the sealing interface is incomplete or altered from its original form. As this occurs, and during operation, air may bleed from the turbine, resulting in a loss of efficiency.

This sealing interface 112 may, in various embodiments, be repaired by healing or replacing, as described herein, the eroded or lost material with a repair material such that the lost edge or portion 114 of the sealing interface 112 may be rebuilt.

In general, a repair material may comprise a combination of two or more materials. For example, in accordance with the present invention, a repair material comprises a first material, which is referred to herein as the "parent material" and a second or additive material, which lowers the melting temperature of the parent material. The parent material comprises a material that is the same as the material comprising the part being repaired. For example, in various embodiments, the parent material (as well as the sealing interface 112) may comprise largely of nickel or cobalt alloy, while the additive material may comprise boron. As described, the boron (the additive material) may lower the melting temperature of the nickel (the parent material) by approximately 40 degrees Fahrenheit (22.2°C). In various embodiments, the repair material may include a variety of binders and other inclusions such that the repair material may comprise a gel, a paste, a powder, and/or the like.

Typically, for the parent material within the repair material to form a metallurgical bond with the parent material comprising the remaining portion of the sealing interface 112, it is necessary that the additive material (e.g., boron) leach or diffuse into the parent material in the remaining portion of the damaged component 112. Thus, although the application of repair material to a damaged component may repair the component, the component's melting temperature, once repaired, may also be reduced by the introduction of boron to its composition.

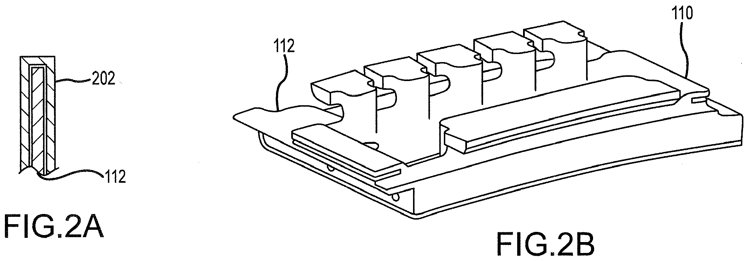

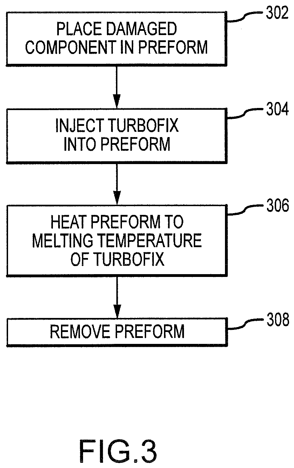

With reference to Figures 2A and Figure 3 (describing a repair process 300), however, insertion of a damaged component, such as the interface 112, into a structural element comprising a shaped cavity 202 may prevent or reduce the effect described above. Specifically, where the shaped cavity 202 comprises parent material as well, the additive material in the repair material may be encouraged to diffuse into the shaped cavity 202 rather than the parent material comprising the component to be repaired, such as the sealing interface 112. Further, even where the shaped cavity does not comprise parent material (e.g., where the shaped cavity comprises sheet metal), boron may migrate during a diffusion process into the shaped cavity 202 (step 304), rather than the damaged component.
In various embodiments, then, a damaged component, such as the sealing interface 112, may be overlaid or inserted within the shaped cavity 202 (step 302), and, as part of a repair process, repair material comprising the parent material and an additive material may be injected into the shaped cavity 202 (step 304). The shaped cavity 202 may comprise any shape that is suitable for repairing a particular component. Thus, the shaped cavity 202 is referred to herein as a "preform" in the sense that it comprises a mold capable of receiving a damaged component and repair material to reconstruct the shape of the original component. For example, as shown, the shaped cavity 202 may comprise a rectangular shape in the event, as here, that a sealing interface 112 is in need of repair. Further, in various embodiments, parent material may be applied using a variety of techniques as well as before and/or after the shaped cavity 202 is installed.

Accordingly, having injected repair material into the shaped cavity 202, a diffusion process may be initiated (e.g., by the application of heat to the shaped cavity 202) (step 306). As the shaped cavity 202 is heated to the melting temperature of the repair material (which, again, may be approximately 40 degrees Fahrenheit (22.2°C) lower than the melting point of the parent material comprising the damaged component and the shaped cavity 202), the parent material in the repair material may melt to form a metallurgical bond with the parent material comprising the damaged part (e.g., the sealing interface 112), while the additive material (e.g., Boron) may diffuse into the shaped cavity 202. Thus, the repaired component may retain its original melting point and temperature resistance. In various embodiments, the additive material may comprise any cobalt and/or nickel alloy.

In various embodiments, after repairs are completed, the shaped cavity 202 may be removed by any suitable means-e.g., it may be machined away, chemically removed, and the like (step 308). In addition, in various embodiments, as the additive material is diffused into the shaped cavity 202, the melting point of the shaped cavity 202 may be reduced and therefore itself melt away from the reconstructed component, such as the sealing interface 112. A reconstructed sealing surface 112 is shown mounted to a BOAS segment 110 in Figure 2B. Furthermore, the repair process 300 may, in various embodiments, be especially useful in the restoration of tall and/or thin components (e.g., approximately 0.040 inches (or 0.1016 centimeters) and larger).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the invention is accordingly limited by the appended claims.

## Claims

1. A method for repair comprising the following steps:
placing a damaged component (112) within a shaped cavity (202), wherein the shaped cavity (202) comprises a mold configured to reconstruct the shape of the damaged component (112);
applying a repair material within the shaped cavity (202);
applying heat to the shaped cavity (202) to repair the damaged component (112);
**characterised in that**
the repair material comprises a parent material and an additive material, wherein the parent material is the same material as the damaged component (112) and the additive material lowers the melting temperature of the parent material; and by
applying heat to the shaped cavity (202) such that the additive material in the repair material diffuses into the shaped cavity (202), while the parent material in the repair material bonds metalurgically to the damaged component (112).

2. The method of claim 1, further comprising removing the shaped cavity (202) to produce a repaired component.

3. The method of any of claims 1 or 2, wherein the repair material comprises a composition of nickel and boron.

4. The method of any of claims 1, 2 or 3, wherein the shaped cavity (202) comprises the same material as the damaged component (112).

5. The method of any of claims 1 to 4, wherein the melting point of the shaped cavity (202) is reduced such that it is capable of melting away from the damaged component (112).

## Patentansprüche

1. Verfahren zur Reparatur, die folgenden Schritte umfassend:
Platzieren einer beschädigten Komponente (112) innerhalb eines geformten Hohlraums (202), wobei der geformte Hohlraum (202) eine Form umfasst, die konfiguriert ist, um die Form der beschädigten Komponente (112) zu rekonstruieren;
Auftragen eines Reparaturmaterials innerhalb des geformten Hohlraums (202);
Anwenden von Wärme auf den geformten Hohlraum (202), um die beschädigte Komponente (112) zu reparieren;
**dadurch gekennzeichnet, dass**
das Reparaturmaterial ein Hauptmaterial und ein zusätzliches Material umfasst, wobei das Hauptmaterial das gleiche Material wie die beschädigte Komponente (112) ist und das zusätzliche Material die Schmelztemperatur des Hauptmaterials senkt; und durch
Anwenden von Wärme auf den geformten Hohlraum (202), sodass das zusätzliche Material in dem Reparaturmaterial in den geformten Hohlraum (202) diffundiert, während das Hauptmaterial in dem Reparaturmaterial metallurgisch an die beschädigte Komponente (112) bindet.

2. Verfahren nach Anspruch 1, ferner umfassend das Entfernen des geformten Hohlraums (202), um eine reparierte Komponente zu erzeugen.

3. Verfahren nach einem der Ansprüche 1 oder 2, wobei das Reparaturmaterial eine Zusammensetzung aus Nickel und Bor umfasst.

4. Verfahren nach einem der Ansprüche 1, 2 oder 3, wobei der geformte Hohlraum (202) das gleiche Material wie die beschädigte Komponente (112) umfasst.

5. Verfahren nach einem der Ansprüche 1 bis 4, wobei der Schmelzpunkt des geformten Hohlraums (202) reduziert ist, sodass er von der beschädigten Komponente (112) wegschmelzen kann.

## Revendications

1. Procédé de réparation comprenant les étapes suivantes :
le placement d'un composant endommagé (112) à l'intérieur d'une cavité formée (202), dans lequel la cavité formée (202) comprend un moule conçu pour reconstituer la forme du composant endommagé (112) ;
l'application d'un matériau de réparation à l'intérieur de la cavité formée (202) ;
l'application de chaleur à la cavité formée (202) pour réparer le composant endommagé (112) ;
**caractérisé en ce que**
le matériau de réparation comprend un matériau parent et un matériau additif, dans lequel le matériau parent est le même matériau que le composant endommagé (112) et le matériau additif baisse la température de fusion du matériau parent ; et par
l'application de chaleur à la cavité formée (202) de sorte que le matériau additif dans le matériau de réparation se diffuse dans la cavité formée (202), tandis que le matériau parent dans le matériau de réparation se lie d'un point de vue métallurgique au composant endommagé (112).

2. Procédé selon la revendication 1, comprenant en outre le retrait de la cavité formée (202) pour produire un composant réparé

3. Procédé selon l'une quelconque des revendications 1 ou 2, dans lequel le matériau de réparation comprend une composition de nickel et de bore.

4. Procédé selon l'une quelconque des revendications 1, 2 ou 3, dans lequel la cavité formée (202) comprend le même matériau que le composant endommagé (112).

5. Procédé selon l'une quelconque des revendications 1 à 4, dans lequel le point de fusion de la cavité formée (202) est réduit de sorte qu'il est capable de fondre à distance du composant endommagé (112).
